# EUROPÄISCHE PATENTSCHRIFT

(11) **EP 0 528 506 B1**
(45) Veröffentlichungstag und Bekanntmachung des Hinweises auf die Patenterteilung: **04.10.1995**
(21) Anmeldenummer: 92250215.8
(22) Anmeldetag: 13.08.1992
(51) Int. Cl.: B60C 27/14

(54) **Vorrichtung zum Befestigen einer Gleitschutzvorrichtung an einem Fahrzeugrad**
Device for attaching an antiskid device to a vehicle wheel
Dispositif pour fixer un dispositif antidérapant à une roue de véhicule

(30) Priorität: 16.08.1991 DE 4127448
(43) Veröffentlichungstag der Anmeldung: 24.02.1993
(73) Patentinhaber: RUD-Kettenfabrik Rieger & Dietz GmbH u. Co., D-73406 Aalen (DE)
(72) Erfinder: Zeiser, Peter, Dipl.-Ing., W-7080 Aalen-Wasseralfingen (DE)
(74) Vertreter: Böning, Manfred, Dr.-Ing.

(56) Entgegenhaltungen:
- DE-C- 3 844 494
- DE-U- 8 623 171
- US-A- 4 522 421

## Beschreibung

Die Erfindung betrifft eine Vorrichtung zum Befestigen der Halterung einer Gleitschutzvorrichtung an der Radschraube oder Radmutter eines Fahrzeugrades nach dem Oberbegriff des Anspruches 1.

Eine Vorrichtung der in Betracht gezogenen Art ist aus der DE 38 44 494 A1 bekannt. Einschlägige Vorrichtungen werden im Zusammenhang mit einer bestimmten Gattung von Gleitschutzvorrichtungen benutzt, bei denen ein durchgehendes Laufnetz durch mit der Halterung verbundene und sich von dieser radial nach außen erstreckende, federnde Auslegerarme in den Bereich der Lauffläche des Reifens gedrückt und dort gehalten wird. Bei der bekannten Vorrichtung greifen bei montierter Gleitschutzvorrichtung zwei Ringwulste eines in eine Bohrung einer Radschraube eingeführten und sich unter der Einwirkung einer die Halterung mit der Vorrichtung verbindenden Spannfeder schräg stellenden Steckzapfens in Ringnuten an der Wand der Bohrung. Der Aufbau der bekannten Befestigungsvorichtung ist außerordentlich einfach, der Sicherheit der Verbindung sind jedoch beim Fahren im unwegsamen Gelände aufgrund dynamischer Beanspruchungen Grenzen gesetzt.

Der Erfindung liegt die Aufgabe zugrunde, eine gattungsgemäße Vorrichtung so zu gestalten, daß sie bei leichter Handhabbarkeit auch unter extremen Bedingungen die sichere Befestigung einer einschlägigen Gleitschutzvorrichtung gewährleistet. Diese Aufgabe wird durch die Lehre des Anspruches 1 gelöst.

Weitere Einzelheiten und Merkmale der Erfindung ergeben sich aus den Unteransprüchen und der nachfolgenden Beschreibung einer in der beigefügten Zeichnung dargestellten bevorzugten Ausführungsform. Es zeigen:
Fig. 1 die perspektivische Ansicht einer auf ein Fahrzeugrad montierten Gleitschutzvorrichtung und ihre Befestigung an einer einzelnen Radschraube,
Fig. 2 eine Draufsicht auf die wesentlichen Teile der Befestigungsvorrichtung,
Fig. 3 teilweise im Schnitt eine Seitenansicht des Anschlußteiles der Befestigungsvorrichtung,
Fig. 4 die der Radschraube zugewandte Seite des Anschlußteiles gemäß Fig. 3,
Fig. 5 teilweise im Schnitt den Kopf einer Radschraube,
Fig. 6 die Draufsicht auf die dem Anschlußteil zugewandte Seite der Radschraube,
Fig. 7 eine Einzelheit des Anschlußteiles gemäß Fig. 3,
Fig. 8 eine Einzelheit von Fig. 7 und
Fig. 9 ein Zwischenstück zur Verbindung des Anschlußteiles gemäß Fig. 3 mit einer handelsüblichen Radschraube.

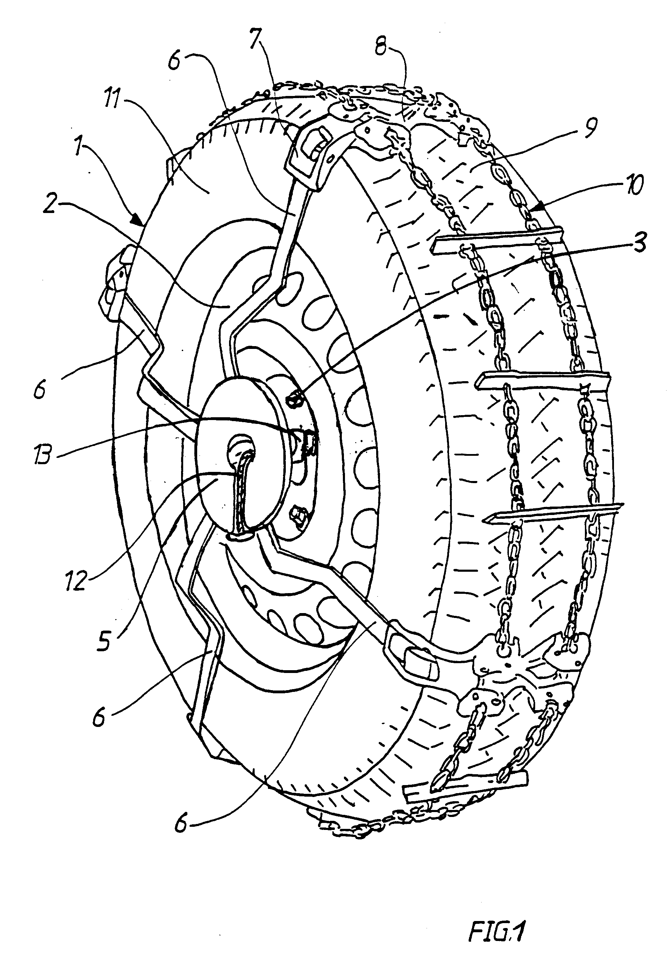

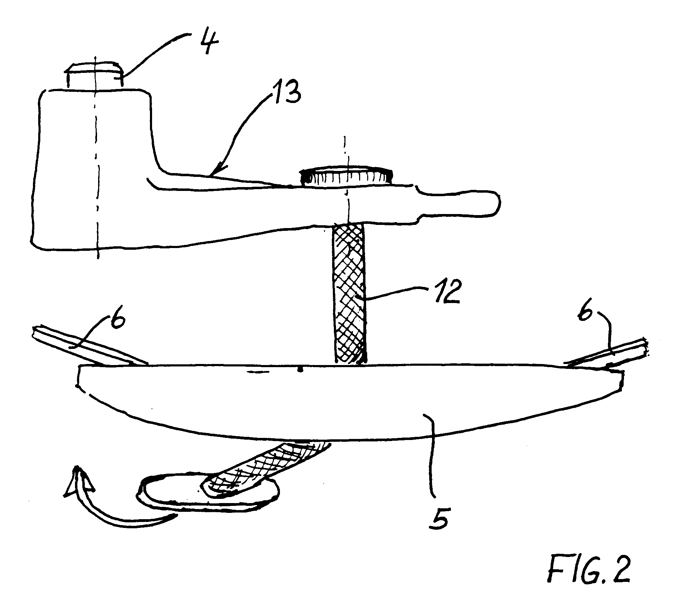

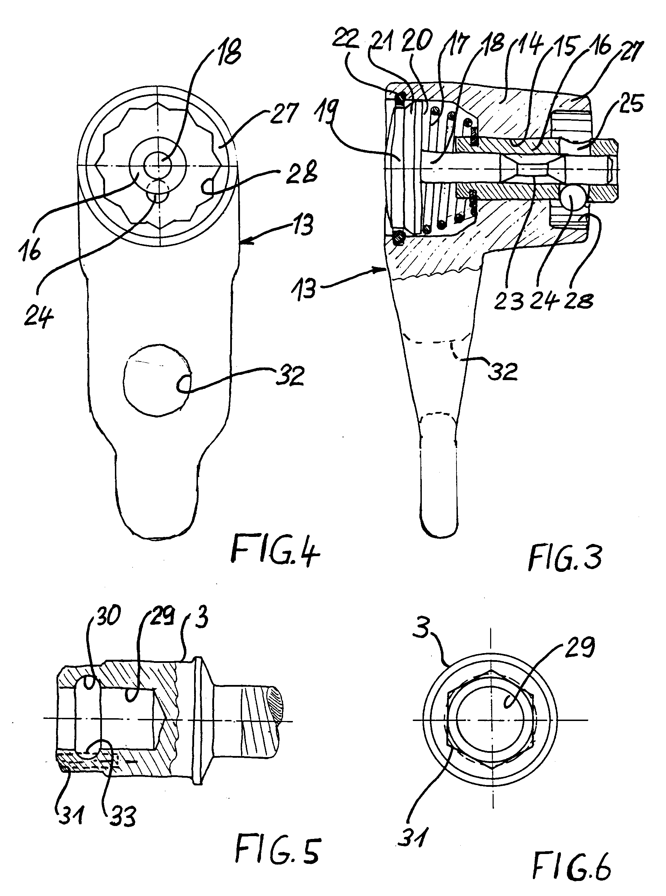

In Fig. 1 ist 1 ein Fahrzeugrad mit einer Felge 2, die mittels Radschrauben 3 mit einer in Fig. 1 nicht dargestellten Radnabe verbunden ist. Eine der Radschrauben 3 ist als Spezialschraube ausgebildet und wird zur Verankerung eines Steckzapfens 4 (siehe Fig. 2 und 3) einer Befestigungsvorrichtung für eine auf das Fahrzeugrad 1 aufgezogene Gleitschutzvorrichtung verwendet. Die Gleitschutzvorrichtung besitzt eine zentrale Halterung 5 für vier sich von der Halterung 5 radial nach außen erstreckende Arme 6, deren der Halterung 5 abgewandte Enden gelenkig mit Auslegern 7 von Gleitschutzelementen 8 verbunden sind, die Teile eines die Lauffläche 9 des Fahrzeugrades 1 bedeckenden, einen in sich geschlossenen Ring formenden Laufnetzes 10 bilden. Das Laufnetz 10 wird durch die Arme 6 auf der Lauffläche 9 gehalten, ohne daß es einer inneren Seitenkette oder vergleicbarer Mittel bedarf. Um zu erreichen, daß das Laufnetz 10 automatisch auf die Lauffläche 9 des Fahrzeugrades aufgezogen wird und dort anschließend auch in kritischen Situationen, wie bei einer scharfen Kurvenfahrt, verbleibt, müssen die Arme 6 federnd gegen die Flanke des Reifens des Fahrzeugrades gedrückt werden. Hierzu dient eine einzige zentrale Spannfeder 12, die drehbar in der Halterung 5 und/oder einem Anschlußteil 13 gelagert ist. Halterung 5, Spannfeder 12 und Anschlußteil 13 sind unverlierbar miteinander verbunden und bilden mit den Armen 6 und dem Laufnetz 10 ein einheitliches Gebilde.

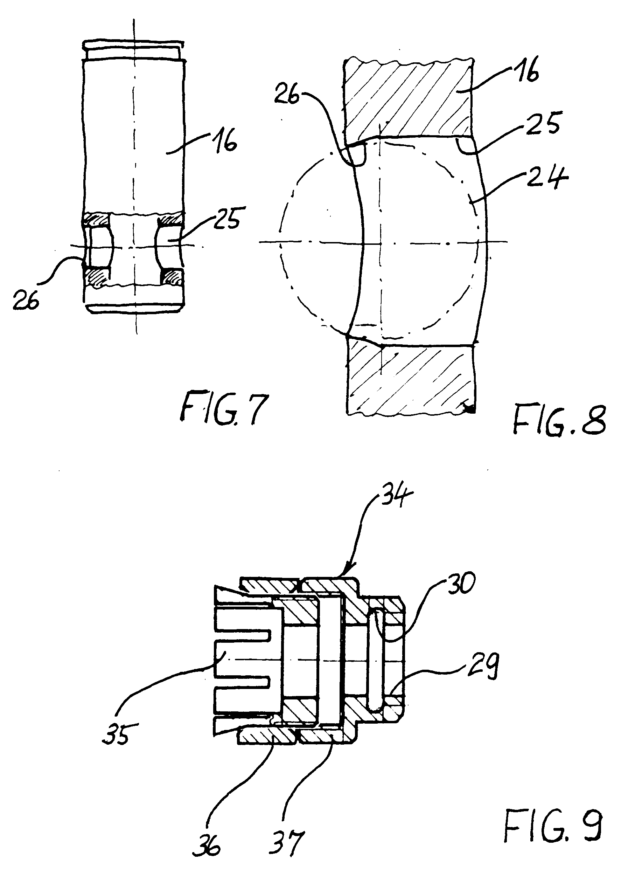

Einzelheiten der Befestigungsvorrichtung für die Gleitschutzvorrichtung zeigen die Figuren 2 bis 8.

Das Anschlußteil 13 besitzt einen Kopf 14 mit einer Bohrung 15 zur Aufnahme eines hohlen Steckzapfens 16. Der Steckzapfen 16 bildet eine Führungsbuchse für einen gegen die Wirkung einer Rückstellfeder 17 hin- und herbewegbaren Verriegelungsbolzen 18, wobei zum Einleiten einer Bewegung in den Verriegelungsbolzen 18 ein Druckknopf 19 dient, der zusammen mit der Feder 17 in einer Aufnahme 20 angeordnet ist, die sich an die Bohrung 15 anschließt. Der Druckknopf weist eine Schrägschulter 21 auf, die durch die Rückstellfeder 17 gegen einen O-Ring gedrückt wird, der gleichzeitig die Funktion eines Anschlages und einer Dichtung erfüllt.

Der Verriegelungsbolzen 18 ist mit einer Ringnut 23 versehen, in die bei gegen die Wirkung der Rückstellfeder 17 in die Aufnahme 20 gedrücktem Druckknopf 19 eine Kugel 24 eintreten kann, die an einem Ende einer Querbohrung 25 des Steckzapfens 16 gelagert ist. Bei der Herstellung der Querbohrung 25 wird diese mit einem Stufenbohrer bearbeitet, der am dem Eintrittsende der Querbohrung gegenüberliegenden Ende Material stehen läßt, das einen Sitz 26 für die Kugel 24 bildet.

Der die Querbohrung 25 umschließende Abschnitt des Steckzapfens 16 bildet einen Ringbund 27, der an seiner Innenseite mit einer Verzahnung 28 versehen ist.

Beim Anbringen der Gleitschutzvorrichtung am Fahrzeugrad wird der Steckzapfen 16 in die Bohrung 29 der Radschraube 3 gesteckt. Die Bohrung 29 ist mit einer Ringnut 30 versehen, deren Profil dem Durchmesser der Kugel 24 angepaßt ist. Sowohl die Ringnut 30 als auch die Ringnut 23 haben schräge Seitenwände. Um den Steckzapfen 16 in die Bohrung 29 der Radschraube 3 einführen zu können, wird der Druckknopf 19 gegen die Wirkung der Rückstellfeder 17 so weit in die Ausnehmung 20 gedrückt, daß die Kugel 24 in die Ringnut 23 eintreten kann und ihr äußerster Punkt mithin auf dem Umfang des Steckzapfens liegt. Nachdem der Steckzapfen 16 in die Bohrung 29 gesteckt worden ist, läßt man den Druckknopf 19 los und die Kugel 24 wird durch eine der schrägen Seitenwände der Ringnut 23 in die Ringnut 30 gedrückt. Danach ist das Anschlußteil 13 formschlüssig mit der Radschraube 3 verbunden.

Der Umstand, daß der Steckzapfen 16 über den Ringbund 27 vorsteht, erleichtert den Anschlußvorgang. Nachdem man nämlich zunächst lediglich den vorstehenden Teil des Steckzapfens 16 in die Bohrung 29 eingeführt hat, läßt sich das Anschlußteil 13 bequem in eine gewünschte Lage schwenken.

Beim weiteren Einführen des Steckzapfens 16 in die Bohrung 29 greift die Verzahnung über den Sechskantkopf 31 der Radmutter 3. Sie erlaubt es, das Anschlußteil 13 in einer Winkelposition gegenüber der Radmutter 3 zu arretieren, in der das mit einer Bohrung 32 für die Spannfeder 12 versehene Ende zum Zentrum des Fahrzeugrades 1 gerichtet ist. Anstatt eine Verzahnung 28 zu verwenden, ist es auch möglich, mit Vorsprüngen 33 zu arbeiten, die in das Innere der Ringnut 30 ragen, wie dies in Fig. 5 durch gestrichelte Linien angedeutet ist. Die Vorsprünge 33 können dabei durch über den Umfang der Ringnut 30 verteilte Stifte gebildet werden, die in parallel zur Längsachse der Radschraube 3 verlaufende Bohrungen eingeschlagen sind.

In Fällen, in denen man auf den Einsatz spezieller Radschrauben 3 verzichten möchte, kann mit einer auf den Sechskantkopf 31 der Radschraube 3 oder der Radmutter steck- und dort festklemmbaren Klemmvorrichtung 34 gearbeitet werden, wie sie beispielsweise aus der DE-OS 28 41 854 bekannt ist. Die Klemmvorrichtung besteht aus einer Spreizhülse 35, einer Druckhülse 36 und einer Schraubhülse 37, in die die Ringnut 30 eingearbeitet ist. Die Spreizhülse 35 wird auf den Kopf der Radschraube gesteckt und anschließend werden ihre Lamellen durch die Druckhülse 36 fest gegen diesen gepreßt, indem man die Schraubhülse 37 mit der Spreizhülse 36 verschraubt.

## Patentansprüche

1. Vorrichtung zum Befestigen der Halterung einer Gleitschutzvorrichtung an der Radschraube (3) oder Radmutter eines Fahrzeugrades mit einem Steckzapfen (16), der mittels mindestens eines über seinen Umfang vorstehenden Vorsprunges in einer mit einer umlaufenden Ringnut (30) versehenen radseitigen Bohrung (29) verankerbar ist, und mit einem den Steckzapfen (16) haltenden Anschlußteil (13), das nach Art eines sich von der jeweiligen Radschraube (3) bzw. Radmutter zum Radzentrum erstreckenden Auslegers ausgebildet und dort über eine Spannfeder (12) mit der Halterung verbunden ist, **dadurch gekennzeichnet**, daß der Steckzapfen (16) hohl und mit einer an ihrem einen Ende verengten Querbohrung (25) versehen ist, daß der Steckzapfen (16) eine Führungsbuchse für einen gegen die Wirkung einer Rückstellfeder (17) durch einen Druckknopf (19) betätigbaren Verriegelungsbolzen (18) für eine unverlierbar in dem das verengte Ende aufweisenden Teil der Querbohrung (25) gelagerte Kugel (24) bildet und daß der Verriegelungsbolzen (18) mit einer Ringnut (23) versehen ist, in die die Kugel (24) bei Betätigung des Druckknopfes (19) unter Austreten aus der Ringnut (30) in der den Steckzapfen (16) aufnehmenden radseitigen Bohrung (29) ausweichen kann.

2. Vorrichtung nach Anspruch 1, **dadurch gekennzeichnet**, daß die Ringnut (23) des Verriegelungsbolzens (18) und die Ringnut (30) der zur Aufnahme des Steckzapfens (16) dienenden radseitigen Bohrung (29) schräge Seitenwände aufweisen.

3. Vorrichtung nach Anspruch 2, **dadurch gekennzeichnet**, daß der Querschnitt der Ringnut (30) der radseitigen Bohrung (29) an den Durchmesser der Kugel (24) angepaßt ist.

4. Vorrichtung nach einem der Ansprüche 1 bis 3, **dadurch gekennzeichnet**, daß das Anschlußteil (13) mit einer Aufnahme (20) für die den Verriegelungsbolzen (18) umschließende Rückstellfeder (17) und den mit dem Verriegelungsbolzen (18) verbundenen und zu seiner Betätigung dienenden Druckknopf (19) versehen ist und daß zur Sicherung des Druckknopfes (19) in der Aufnahme (20) ein in eine Ringnut der Aufnahme (20) eingesetzter, einen Anschlag bildender O-Ring (22) dient.

5. Vorrichtung nach Anspruch 4, **dadurch gekennzeichnet**, daß der Druckknopf (19) mit einer in seiner Ruhestellung gegen den O-Ring (22) anliegenden Schrägschulter (21) versehen ist.

6. Vorrichtung nach einem der Ansprüche 1 bis 5, **dadurch gekennzeichnet**, daß sie mit Mitteln zur Fixierung des Anschlußteiles (13) in unterschiedlichen Winkelpositionen gegenüber der Radschraube (3) oder Radmutter ausgestattet ist.

7. Vorrichtung nach Anspruch 6, **dadurch gekennzeichnet**, daß zur Fixierung des Anschlußteiles (13) in einer bestimmten Winkelposition eine an der Innenseite eines Ringbundes (27) des Anschlußteiles (13) angeordnete Verzahnung (28) dient.

8. Vorrichtung nach Anspruch 6, **dadurch gekennzeichnet**, daß zur Fixierung des Anschlußteiles (13) in einer bestimmten Winkelposition in die Ringnut (30) der den Steckzapfen (16) aufnehmenden Bohrung (29) ragende Vorsprünge (33) dienen.

9. Vorrichtung nach einem der Ansprüche 1 bis 8, **dadurch gekennzeichnet**, daß der Steckzapfen (16) über einen ihn umschließenden Ringbund (27) des Anschlußteiles (13) vorsteht.

10. Vorrichtung nach einem der Ansprüche 1 bis 9, **dadurch gekennzeichnet**, daß die radseitige Bohrung (29) zur Aufnahme des Steckzapfens (16) im Kopf (31) der Radschraube (3) oder Radmutter angeordnet ist.

11. Vorrichtung nach einem der Ansprüche 1 bis 9, **dadurch gekennzeichnet**, daß die radseitige Bohrung (29) zur Aufnahme des Steckzapfens (16) in einem Teil einer auf den Kopf (31) der Radschraube (3) oder Radmutter steck- und dort festklemmbaren Klemmvorichtung (34) angeordnet ist.

12. Vorrichtung nach einem der Ansprüche 1 bis 11, **dadurch gekennzeichnet**, daß das Anschlußteil (13) aus Kunststoff besteht.

## Claims

1. Device for attaching the mounting of an antiskid device to the wheel screw (3) or wheel nut of a vehicle wheel, having a plug-in journal (16) which can be anchored, by means of at least one projection protruding over its periphery, in a wheel-side bore (29) provided with a circumferential annular groove (30), and having a connecting part (13) which holds the plug-in journal (16) and is configured in the style of an extension arm extending from the respective wheel screw (3) or wheel nut to the wheel centre and is there connected by a tension spring (12) to the mounting, characterized in that the plug-in journal (16) is hollow and is provided with a transverse bore (25) which is constricted at its one end, in that the plug-in journal (16) forms a guide bush for a locking bolt (18) for a ball (24) mounted captively in that part of the transverse bore (25) having the constricted end, which locking bolt can be actuated counter to the action of a restoring spring (17) by a push button (19), and in that the locking bolt (18) is provided with an annular groove (23) into which the ball (24), upon actuation of the push button (19), in leaving the annular groove (30) in the wheel-side bore (29) receiving the plug-in journal (16), is able to escape.

2. Device according to Claim 1, characterized in that the annular groove (23) of the locking bolt (18) and the annular groove (30) of the wheel-side bore (29) serving the reception of the plug-in journal (16) have oblique side walls.

3. Device according to Claim 2, characterized in that the cross-section of the annular groove (30) of the wheel-side bore (29) is matched to the diameter of the ball (24).

4. Device according to one of Claims 1 to 3, characterized in that the connecting part (13) is provided with a receiving fixture (20) for the restoring spring (17) enclosing the locking bolt (18) and for the push button (19) connected to the locking bolt (18) and serving for its actuation, and in that the securement of the push button (19) in the receiving fixture (20) is served by an O-ring (22) inserted in an annular groove of the receiving fixture (20) and forming a stop.

5. Device according to Claim 4, characterized in that the push button (19) is provided with an oblique shoulder (21) which, in its rest position, bears against the O-ring (22).

6. Device according to one of Claims 1 to 5, characterized in that it is equipped with means for fixing the connecting part (13) in different angular positions relative to the wheel screw (3) or wheel nut.

7. Device according to Claim 6, characterized in that a toothing (28) disposed on the inner side of an annular collar (27) of the connecting part (13) serves for the fixation of the connecting part (13) in a specific angular position.

8. Device according to Claim 6, characterized in that projections (33) jutting into the annular groove (30) of the bore (29) receiving the plug-in journal (16) serve for the fixation of the connecting part (13) in a specific angular position.

9. Device according to one of Claims 1 to 8, characterized in that the plug-in journal (16) protrudes over an annular collar (27) of the connecting part (13), said annular collar enclosing said plug-in journal.

10. Device according to one of Claims 1 to 9, characterized in that the wheel-side bore (29) for the reception of the plug-in journal (16) is disposed in the head (31) of the wheel screw (3) or wheel nut.

11. Device according to one of Claims 1 to 9, characterized in that the wheel-side bore (29) for the reception of the plug-in journal (16) is disposed in a part of a clamping device (34) which can be placed onto the head (31) of the wheel screw (3) or wheel nut and can be clamped tight there.

12. Device according to one of Claims 1 to 11, characterized in that the connecting part (13) consists of plastics material.

## Revendications

1. Dispositif pour fixer la fixation d'un dispositif antidérapant au boulon ou à l'écrou de fixation de roue d'un véhicule automobile, comportant un embout d'enfichage (16), qui peut être ancré à l'aide d'au moins un appareil saillant qui fait saillie sur sa périphérie, dans un perçage (29) formé côté roue et pourvu d'une gorge annulaire circonférentielle (30), et comportant un élément de raccordement (13), qui retient l'embout enfichable (16) et qui est agencé à la manière d'un bras en console qui s'étend depuis le boulon respectif de roue (3) ou l'écrou de roue en direction du centre de la roue et y est relié, par l'intermédiaire d'un ressort de tension (12), à la fixation, caractérisé par le fait que l'embout enfichable (16) est creux et comporte un perçage transversal (25) rétréci à l'une de ses extrémités, que l'embout enfichable (16) forme une douille de guidage pour un goujon de verrouillage (18), qui peut être actionné à l'encontre d'un ressort de rappel (17), par un bouton-poussoir (19) et est prévu pour une bille (24), qui est montée de façon imperdable dans la partie du perçage transversal (25), qui possède l'extrémité rétrécie, et que le goujon de verrouillage (18) comporte une gorge annulaire (23), dans laquelle, lors de l'actionnement du bouton-poussoir (19), la bille (24) peut s'écarter, en sortant de la gorge annulaire (30), pour venir dans le perçage (29), présent côté roue et qui loge l'embout enfichable (16).

2. Dispositif selon la revendication 1, caractérisé en ce que la gorge annulaire (23) du goujon de verrouillage (18) et la gorge annulaire (30) du perçage (29) prévu côté roue et servant à loger l'embout enfichable (16), comportent des parois latérales obliques.

3. Dispositif selon la revendication 2, caractérisé en ce que la section transversale de la gorge annulaire (30) du perçage (29) prévu côté roue est adaptée au diamètre de la bille (24).

4. Dispositif selon l'une des revendications 1 à 3, caractérisé en ce que l'élément de raccordement (13) est équipé d'un logement (20) pour le ressort de rappel (17), qui entoure le goujon de verrouillage (18), et pour le bouton-poussoir (19) qui est relié au goujon de verrouillage (18) et est utilisé pour son actionnement, et qu'une bague torique (22), qui est insérée dans une gorge annulaire du logement (20) et forme une butée, est utilisée pour le blocage du bouton-poussoir (19) dans le logement (20).

5. Dispositif selon la revendication 4, caractérisé en ce que le bouton-poussoir (19) est équipé d'un épaulement oblique (21), qui, dans sa position de repos, s'applique contre la bague torique (22).

6. Dispositif selon l'une des revendications 1 à 5, caractérisé en ce qu'il est équipé de moyens pour fixer l'élément de raccordement (13) dans des positions angulaires différentes par rapport au boulon de roue (3) ou à l'écrou de roue.

7. Dispositif selon la revendication 6, caractérisé en ce qu'une denture (28), qui est disposée sur la face intérieure d'un collet annulaire (27) de l'élément de raccordement (13), est utilisée pour la fixation de l'élément de raccordement (13) dans une position angulaire déterminée.

8. Dispositif selon la revendication 6, caractérisé en ce que des appendices saillants (33), qui pénètrent dans la gorge annulaire (30) du passage (39), qui loge l'embout enfichable (16), servent à fixer l'élément de raccordement (13) dans une position angulaire déterminée.

9. Dispositif selon l'une des revendications 1 à 8, caractérisé en ce que l'embout enfichable (16) fait saillie au-delà d'un collet annulaire (27), qui l'entoure, de l'élément de raccordement (13).

10. Dispositif selon l'une des revendications 1 à 9, caractérisé en ce que le perçage (29) prévu côté roue et qui sert à loger l'embout enfichable (16) est disposé dans la tête (31) du boulon de roue (3) ou de l'écrou de roue.

11. Dispositif selon l'une des revendications 1 à 9, caractérisé en ce que le perçage (29) prévu côté roue et servant à loger l'embout enfichable (16) est aménagé dans une partie d'un dispositif de serrage (34) qui peut être emmanchée sur la tête (31) du boulon de roue (3) ou d'écrou de roue et peut y être bloquée par serrage.

12. Dispositif selon l'une des revendications 1 à 11, caractérisé en ce que l'élément de raccordement (13) est réalisé en matière plastique.
